(19) Europäisches Patentamt / European Patent Office / Office européen des brevets

(11) **EP 1 692 749 B1**

(12) **EUROPÄISCHE PATENTSCHRIFT**

(45) Veröffentlichungstag und Bekanntmachung des Hinweises auf die Patenterteilung:
**13.02.2008 Patentblatt 2008/07**

(21) Anmeldenummer: **04820063.8**

(22) Anmeldetag: **10.12.2004**

(51) Int Cl.:
*H01S 3/115* (2006.01)  *H01S 3/098* (2006.01)

(86) Internationale Anmeldenummer:
**PCT/EP2004/014078**

(87) Internationale Veröffentlichungsnummer:
**WO 2005/057741 (23.06.2005 Gazette 2005/25)**

(54) **HOCHREPETIERENDES LASERSYSTEM ZUR ERZEUGUNG VON ULTRAKURZEN PULSEN NACH DEM PRINZIP DER PULS-AUSKOPPLUNG**

HIGH-REPETITION LASER SYSTEM FOR GENERATING ULTRA-SHORT PULSES ACCORDING TO THE PRINCIPLE OF CAVITY DUMPING

SYSTEME LASER A TAUX DE REPETITION ELEVE POUR LA PRODUCTION D'IMPULSIONS ULTRACOURTES SELON LE PRINCIPE DE LA DECHARGE DE LA CAVITE

(84) Benannte Vertragsstaaten:
**DE FR GB**

(30) Priorität: **10.12.2003 US 528216 P**
**12.07.2004 US 586735 P**

(43) Veröffentlichungstag der Anmeldung:
**23.08.2006 Patentblatt 2006/34**

(73) Patentinhaber: **High Q Laser Production GmbH**
**6845 Hohenems (AT)**

(72) Erfinder:
• **KOPF, Daniel**
**A-6832 Röthis (AT)**
• **LEDERER, Maximilian, Josef**
**A-6861 Alberschwende (AT)**
• **MORGNER, Uwe**
**30167 Hannover (DE)**

(74) Vertreter: **Harmann, Bernd-Günther**
**Büchel, Kaminski & Partner**
**Patentanwälte Est.**
**Austrasse 79**
**9490 Vaduz (LI)**

(56) Entgegenhaltungen:
EP-A- 0 949 730    US-A- 4 896 119
US-A- 5 848 080    US-A- 5 870 421

• **RAYBAUT P ET AL: "Diode-pumped 100-fs lasers based on a new apatite-structure crystal : Yb<3+>:SrY4(SiO4)3O" LASERS AND ELECTRO-OPTICS EUROPE, 2003. CLEO/EUROPE. 2003 CONFERENCE ON MUNICH, GERMANY 22-27 JUNE 2003, PISCATAWAY, NJ, USA,IEEE, 22. Juni 2003 (2003-06-22), Seiten 423-423, XP010711980 ISBN: 0-7803-7734-6**
• **GLOSTER L A W ET AL: "Diode-pumped Q-switched Yb:S-FAP laser" OPTICS COMMUNICATIONS, NORTH-HOLLAND PUBLISHING CO. AMSTERDAM, NL, Bd. 146, Nr. 1-6, 15. Januar 1998 (1998-01-15), Seiten 177-180, XP004119416 ISSN: 0030-4018**

EP 1 692 749 B1

**Beschreibung**

Die Erfindung betrifft ein hochrepetierendes Lasersystem zur Erzeugung von ultrakurzen Pulsen nach dem Prinzip der Puls-Auskopplung nach dem Oberbegriff von Anspruch 1 und eine Verwendung des Lasersystems.

Bekannte Ultrakurzpuls-Lasersysteme werden zwar in einer Vielzahl von Anwendungen genutzt, wie z.B. Materialverarbeitung, Mikroskopie, Biomedizin oder der Herstellung photonischer Komponenten. Allerdings ist der Einsatz ausserhalb eines Laborbetriebs oft problematisch, da die Laser-Systeme eine grosse Komplexität und einen hohen Handhabungsaufwand bedingen. Zusätzlich zur hohen Energie der Femtosekundenpulse spielt für den industriellen Einsatz insbesondere die Kompaktheit der Lasersysteme eine wesentliche Rolle.

Laseranordnungen nach dem Prinzip der Pulsauskopplung oder des Cavity-Dumpers erlauben die Erzeugung von Pulsen, welche für die Anwendung im Bereich der Mikrostrukturierung erforderliche Energien bzw. Pulsspitzenleistungen besitzen. Dabei kann auf die Verwendung von komplexen Verstärkeranordnungen verzichtet werden, was zu einem kompakten Aufbau führt.

Ein Lasersystem nach dem Prinzip des Puls-Auskopplers oder Cavity Dumpers mit Pulsenergien von bis zu 100 nJ ist beispielsweise aus M. Ramaswamy, M. Ulman, J. Paye, J.G. Fujimoto, "Cavity-dumped femtosecond Kerrlens mode-locked Ti:Al2O3 laser", Optics Letters, Vol. 18, No. 21, 1. November 1993, Seiten 1822 bis 1824 bekannt. Ein modengekoppelter Ti:Al$_2$O$_3$ Laser wird zur Erzeugung von 50 Femtosekunden-Pulsen mit einer Energie von 100 nJ bzw. Pulsspitzenleistungen von 0,1 MW und einer einstellbaren Rate bis zu 950 kHz mit einem akusto-optischen Schalter als Cavity-Dumper betrieben. Der Schalter selbst besteht aus einer Quarz-Zelle, auf die im Brewster-Winkel der Laserstrahl mit einem Spiegel fokussiert wird. Zum Pumpen wird ein Argon-Laser und zur Dispersionskompensation eine nachgelagerte Strecke mit 4 Prismen verwendet.

In A. Baltuška, Z. Wie, M.S. Pshenichniko, D.A. Wiersma, Robert Szipöcs, "All-solid-state cavity-dumped sub-5-fs-laser", Appl. Phys. B 65, 1997, Seiten 175 bis 188 ist ein Festkörper-Lasersystem beschrieben, mit dem nach dem Prinzip des Cavity-Dumpers Laserpulse einer Dauer von unter 5 Femtosekunden erzeugt werden. Das verwendete Ti: Saphir-Lasermedium wird durch einen wiederum diodengepumpten, frequenzverdoppelten Festkörperlaser mit Nd:YVO$_4$ als Lasermedium gepumpt. Die Ausbildung als Cavity-Dumper erfolgt durch eine Bragg-Zelle als akusto-optischem Schalter. Diese Anordnung erfordert ein sorgfältiges Design der Kavität, damit eine Modenkopplung durch Kerr-Linseneffekt nicht bereits durch die Dispersion des akusto-optischen Modulators gestört wird. Eine mögliche Verwendung von elektro-optischen Modulatoren wird erwähnt, wobei allerdings deren Beschränkung auf erzielbare Repetitionsraten von ungefähr 10 kHz hervorgehoben wird. Mit dem beschriebenen Lasersystem sollen sub-5-fs-Pulse mit einer Pulsspitzenleistung von 2 Megawatt und einer Repetitionsrate von 1 MHz realisiert werden.

Hochrepetierende Pulslasersysteme sind auch aus US 5 848 080 A und US 5 870 421 A bekannt.

Einen hochrepetierenden Laser mit Cavity-Dumping und einem elektro-optischen Schalter beschreibt E. Krüger in "High-repetition-rate electro-optic cavity dumping", Rev. Sci. Instrum. 66 (2), Februar 1995, Seiten 961 bis 967. Als Basis der Anordnung dient ein durch einen Argon-Laser synchron gepumpter modengekoppelter Farbstofflaser, wobei als Schalter eine LM 20 Pockels-Zelle aus zwei deuterierten KD*P-Kristallen mit einem Dünnschichtpolarisator Verwendung finden. Das Lasermedium besteht aus einer Lösung von Rhodamin 6G in Ethylenglykol. Die erzeugten Pulse besitzen eine Dauer von 15 Nanosekunden bei einer mittleren ausgekoppelten Leistung von 75 mW und einer Repetitionsrate von 10 MHz.

Ein Laser nach dem Cavity-Dumper-Prinzip mit elektrooptischem Schalter zeigt V. Kubecek, J. Biegert, J.-C. Diels, M.R. Kokta, "Practical source of 50 ps pulses using a flashlamp pumped Nd:YAG laser and passive all-solid-state pulse control", Optics Communications 177 (2000), Seiten 317 bis 321. Ein Nd:YAG-Lasermedium wird durch eine Blitzlampe gepumpt. Als elektro-optischer Schalter findet eine Pockels-Zelle mit dielektrischem Polarisator Verwendung. Die erzielbaren Energien der 50-Pikosekunden-Pulse werden mit 300 μJ bei Repetitionsraten von 5 Hz angegeben, wobei eine Kompression einzelner Pulse innerhalb der Kavität erfolgt.

Ti:Al$_2$O$_3$-Laser liegen damit in den erzielbaren Pulsspitzenleistungen zwar über den Farbstofflasern. Allerdings wird die erreichbare Pulsenergie durch die Verwendung der akusto-optischen Modulatoren eingeschränkt, da für diese der Effekt der Selbstphasenmodulation wegen der benötigten kleinen Fokusse zu hoch wird, was in Pulsinstabilitäten oder auch Zerstörung des Modulatormaterials resultieren kann. Ausserdem erfolgt bei Farbstofflasern eine zeitliche Degradation des Lasermediums und das Pumpen durch Blitzlampen oder Festkörperlaser führt zu komplexen Systemen.

Gattungsgemässe Lasersysteme des Stands der Technik sind somit durch ihren Aufbau und die verwendeten Komponenten zu komplex und/oder in der erreichbaren Pulsenergie limitiert bzw. erreichen keine Pulsdauern im Femtosekundenbereich.

Eine Aufgabe der vorliegenden Erfindung besteht in der Bereitstellung eines kompakten Lasersystems, insbesondere eines diodengepumpten Lasersystems nach dem Prinzip der Pulsauskopplung, welches ultrakurze Pulse mit einer Repetitionsrate grösser als 10 kHz und Pulsenergien über 100 nJ erzeugt.

Eine weitere Aufgabe besteht in der Bereitstellung eines kompakten Lasersystems, insbesondere ohne Elemente zur Pulsverstärkung ausserhalb der Kavität, mit einer Pulsspitzenleistung grösser als 100 kW bei einer Repetitionsfrequenz grösser als 10 kHz.

Diese Aufgaben werden durch die Gegenstände des Anspruchs 1 oder der abhängigen Ansprüche gelöst bzw. die Lösungen weitergebildet.

Die Erfindung betrifft ein hochrepetierendes Lasersystem nach dem Prinzip der Pulsauskopplung, bei dem ein diodengepumpter Piko- oder Femtosekunden-Oszillator mit einem elektro-optischen Modulator als Schalter betrieben wird.

Ein Vorteil des EOM im Vergleich zum AOM besteht darin, dass der EOM mit sehr grossen Strahlquerschnitten betrieben werden kann (z. B. d = 700mum), so dass höhere Energien möglich sind. Damit kann vermieden werden, dass es bei den zu erzeugenden Pulsleistungen bzw. Pulsenergien im Schalter zu exzessiver Selbstphasenmodulation (SPM) oder gar Zerstörung kommt. Ein $SiO_2$-AOM benötigt hingegen typischerweise d < 50mum bei einer Modulatorlänge von 3 mm, um die gleiche Schaltflankenkürze zu erreichen. Es sind zwar längere Modulatorzellen erhältlich bei welchen die Fokusse grösser gehalten werden können. Jedoch verringert sich dabei wegen der Zunahme der Wechselwirkungslänge die angesammelte nichtlineare Phase nicht merklich. Zudem muß - um mit dem EOM-Verfahren vergleichbare Schalteffizienzen zu erreichen - der AOM in der Michelson-Konfiguration betrieben werden, was einen vergleichsweise komplexen Resonatoraufbau bedeutet.

Wollte man nun z. B. am Ausgang des Pulsauskopplers Femtosekundenpulse mit 1 μJ Energie und 200 fs Pulsbreite erzeugen, so müsste innerhalb der Kavität typischerweise eine Pulsenergie von 2 μJ vorliegen. Diese Forderung resultiert aus der Notwendigkeit, dass der Betrieb des cavity dumped Lasers quasi-stationär sein muss, was bei hohen Repetitionsraten und Auskoppelgraden von > 50 % schwierig zu erreichen ist. Bei den genannten Querschnitten und Leistungen im AOM liesse sich aufgrund der Solitonenbedingung

$$|\beta_2| = \frac{\tau_{FWHM} \cdot E \cdot \kappa}{3,526} \qquad (1)$$

mit

$$\kappa = \frac{4 \cdot l_{AOM} \cdot n_2}{\lambda_0 \cdot \omega_0^2} \qquad (2)$$

ein 200 fs Soliton bei 1 μm Wellenlänge nur stabilisieren, wenn die hohe negative Netto-Dispersion von ca. -40000 $fs^2$ in den Resonator eingebracht werden würde. Hierbei bezeichnet

$\beta_2$          die resonatorinterne negative Nettodispersion,
$\tau_{FWHM}$      die Halbwertsbreite der $sech^2$-Solitonen,
$E$           die Pulsenergie,
$\kappa$           den Selbstphasenmodulationsparameter,
$l_{AOM}$       die einfache Länge des akusto-optischen Modulators,
$n_2$         den vom Kerr-Effekt herrührenden nichtlinearen Brechungsindex,
$\lambda_0$         die Vakuumwellenlänge und
$\omega_0$         den Strahlradius im AOM.

Darüber hinaus verbleiben bei Vorliegen einer solchen Dispersion immer noch Probleme, da bei einmaligem Durchgang ein zu hoher Chirp entsteht und die Pulsparameter sich während eines Resonatorumlaufs zu stark ändern. Dies hat zur Folge, dass ein stationärer Solitonbetrieb nicht möglich ist und in der Regel dispersive Strahlung im Resonator entsteht, welche dann zum Mehrfachpulsen oder dynamischer Unstabilität führt. Als Mass für eine diesbezügliche Neigung des Lasers lässt sich z. B. das Verhältnis r der Resonatorperiode und der Solitonenperiode definieren.

$$r = \frac{E \cdot \kappa \cdot 1,763}{\pi \cdot \tau_{FWHM} \cdot 1,134} \qquad (3)$$

Für den stabilen Betrieb sollte dieses Verhältnis << 1 sein. Im obigen Fall läge der Wert bei ca. 3, was eindeutig zu hoch ist. Bei der Erzeugung von Femtosekundenpulsen ist es deshalb vorteilhaft, den r-Parameter kleiner als 1, insbesondere kleiner als 0,25 oder auch kleiner als 0,1 zu wählen. Die Grundlage dieser Berechnung kann F. Krausz, M.E. Fermann, T. Brabec, P.F. Curly, M. Hofer, M.H. Ober, C. Spielmann, E. Wintner, und A.J. Schmidt "Femtosecond Solid-State Lasers" in IEEE Journal of Quantum Electronics, Vol. 28, No. 10, Seiten 2097-2120, Oktober 1992 entnommen werden.

Für ein Femtosekunden-Lasersystem nach dem Prinzip der Pulsauskopplung ist daher die Pulsenergie mit einem EOM einfacher skalierbar als mit einem AOM.

Die durch den EOM generierte Dispersion kann für typische Modulatormaterialien (z. B. BBO) und -längen relativ einfach durch eine Folge von dispersiven Komponenten, z.B. Spiegel, in der Kavität kompensiert werden. Die Anzahl der dispersiven Spiegel wird durch die zu kompensierende positive Dispersion in der Kavität, zu der alle Spiegel, das Lasermedium, der Dünnschichtpolarisator und der BBO-EOM mit einem Hauptanteil beitragen, sowie durch die Solitonenbedingung bestimmt. Letztere besagt, dass für eine bestimmte umlaufende Pulsenergie, einen Parameter der Selbstphasenmodulation und einer zu erzielenden Pulsbreite eine bestimmte negative Netto-Dispersion in der Kavität herrschen muss. Aufgrund der hohen Strahlquerschnitte, welche beim EOM-Schalter möglich sind, wird der Parameter $\kappa$ der Selbstphasenmodulation nur bestimmt durch den Strahlquerschnitt im Lasermedium und dessen nichtlinearen Brechungsindex $n_2$.

Zur Dispersionskompensation können dispersive Spiegel, z.B. Gires-Tournois-Interferometer, Verwendung finden, die somit zur Kompensation der positiven Dispersion in der Kavität und zur Erfüllung der Solitonenbedingung dienen.

Mit einer solchen Ausgestaltung eines Lasersystems nach dem Prinzip der Pulsauskopplung wurden Femtosekundenpulse mit einer Repetitionsfrequenz bis zu 1 MHz und einer Pulsenergie von 500 nJ und damit mehr als 1 MW Leistung erzeugt. Das Lasersystem wird dabei unter Verwendung der dispersiven Spiegel und eines sättigbaren Absorberspiegels modengekoppelt betrieben.

Ein erfindungsgemässes Lasersystem erlaubt durch die erzielbare Strahlungscharakteristik auch die Verwendung zur direkten, d.h. verstärkerfreie, Materialbearbeitung. Hierbei wird durch das Strahlungsfeld in direktem Kontakt mit dem Material ein Plasma generiert, das zur Bearbeitung genutzt wird.

Ein Ausführungsbeispiel für ein erfindungsgemässes Lasersystem wird nachfolgend schematisch dargestellt und rein beispielhaft näher beschrieben. Im einzelnen zeigen

Fig.1    die Darstellung eines ersten Ausführungsbeispiels des erfindungsgemässen Lasersystems im Femtosekundenbereich;

Fig.2    die Darstellung eines zweiten Ausführungsbeispiels des erfindungsgemässen Lasersystems im Pikosekundenbereich;

Fig.3    die Darstellung des Verlaufs der Pulsenergie innerhalb der Kavität in Zeitabhängigkeit für eine Repetitionsfrequenz von 15 kHz in einer Femtosekunden-Anordnung;

Fig.4    die Darstellung des Verlaufs der Pulsenergie innerhalb der Kavität in Zeitabhängigkeit für eine Repetitionsfrequenz von 173 kHz in einer Femtosekunden-Anordnung;

Fig.5    die Darstellung der Pulsevolution innerhalb der Kavität für eine Repetitionsfrequenz von 1 MHz in einer Pikosekunden-Anordnung;

Fig.6    die Darstellung der Pulsevolution nach Auskopplung ausserhalb der Kavität für eine Repetitionsfrequenz von 1 MHz in einer Pikosekunden-Anordnung;

Fig.7    die Darstellung der Pulsevolution innerhalb der Kavität für eine Repetitionsfrequenz von 100 kHz in einer Pikosekunden-Anordnung und

Fig.8    die Darstellung des Verlaufs der ausgekoppelten Energie in Abhängigkeit von der Frequenz der Auskopplung für Femto- und Pikosekunden-Anordnung.

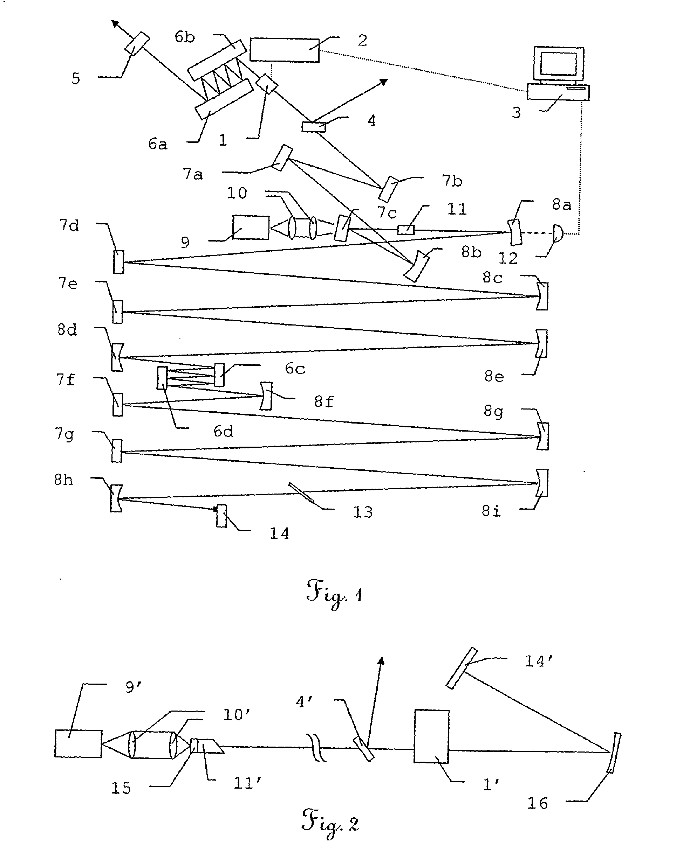

In Fig.1 wird ein erstes Ausführungsbeispiel des erfindungsgemässen Lasersystems nach dem Prinzip der Pulsauskopplung für den Femtosekundenbereich dargestellt. Das Lasersystem basiert auf einer gefalteten Kavität in an sich bekannter Ausführungsform. Als Lasermedium 11 wird Ytterbium gedoptes LG760 Glas verwendet, das mit einer mit 976 nm emittierenden Pumpdiode 9 über eine Kombination von zwei achromatischen Linsen 10 gepumpt wird.

Weitere geeignete Materialien für das Lasermedium 11 sind beispielsweise mit Ytterbium dotierte Wolframate, wie z.B. Yb:KGW oder Yb:KYW. Die Linsen 10 besitzen Brennweiten von 30 mm bzw. 75 mm. Durch einen sättigbar absorbierenden Spiegel 14 und dispersive Spiegel 6a-d, 7a-g, 8a-i zur Erzeugung der notwendigen negativen Dispersion wird eine Soliton-Modenkopplung bewirkt. Zur Vermeidung der exzessiven Selbstphasenmodulation eines akusto-optischen Modulators wird eine Beta-Barium-Borat (BBO)-Pockels-Zelle als elektro-optisches Element 1 zusammen mit einem Dünnschichtpolarisator 4 zur Pulsauskopplung verwendet, welches über eine Hochspannungsversorgung 2 und einen Rechner als Schaltsignalgenerator 3 geschaltet wird. In Abhängigkeit von der an das elektro-optische Element 1 angelegten Spannung wird die Polarisationsebene eines Laserstrahls gedreht, so dass über den Dünnschichtpolarisator 4 ausgekoppelt werden kann.

In der Kavität baut sich ein Puls aus dem Rauschen oder einem von einem vorhergehenden Puls verbliebenen Strahlungsfeld auf und wird bei jedem Durchgang durch das Lasermedium 11 verstärkt, wobei mehrfache Reflexionen an den dispersiven Spiegeln 6c-d, 7a-g, 8a-i erfolgen. Nach einer gewissen Anzahl von Resonatorumläufen und Durchgängen durch das verstärkende Lasermedium 11 wird der Puls durch eine Rotation der Polarisation mittels Schalten des elektrooptischen Elements 1 über den Dünnschichtpolarisator 4 als Laserpuls ausgekoppelt. Diese Anordnung stellt lediglich ein Ausführungsbeispiel für eine Laseranordnung nach dem Prinzip der Pulsauskopplung dar.

Die einzelnen Komponenten der Laseranordnung in Fig.1 sind wie folgt bezeichnet

| 1 | elektro-optisches Element |
|---|---|
| 2 | Hochspannungsversorgung |
| 3 | Schaltsignalgenerator |
| 4 | Dünnschichtpolarisator |
| 5 | Hochreflektor |
| 6a-d | Dispersiver Planar-Spiegel |
| 7a-g | Dispersiver Planar-Spiegel |
| 8a-i | Dispersiver gekrümmter Spiegel |
| 9 | Pumpdiode |
| 10 | Achromatische Linse |
| 11 | Lasermedium |
| 12 | Photodiode |
| 13 | Doppelbrechender Filter |
| 14 | Sättigbar absorbierender Spiegel |

Eine weitere geeignete Komponente für einen elektrooptischen Modulator stellt beispielsweise eine Zelle aus $RTiOPO_4$ oder Rubidium-Titanyl-Phosphat (RTP) dar. Aufgrund der auftretenden thermischen Drifteffekte ist eine Nachjustierung oder eine diesbezügliche Regelung vorteilhaft.

Fig.2 zeigt einen diodengepumpten, SESAM-modengekoppelten $Nd:YVO_4$-Pikosekundenlaser nach dem Prinzip der Pulsauskopplung mit EOM als zweites Ausführungsbeispiel des erfindungsgemässen Lasersystems. Das Lasersystem ähnelt der in Fig.1 dargestellten Anordnung und basiert ebenfalls auf einer gefalteten Kavität in an sich bekannter Ausführungsform, die in Fig.2 jedoch aus Anschaulichkeitsgründen nicht explizit dargestellt ist. Als Lasermedium 11' wird mit einer teildurchlässigen Spiegelschicht 15 versehenes $Nd:YVO_4$ verwendet, das mit einer Pumpdiode 9' über eine Kombination von zwei achromatischen Linsen 10' gepumpt wird. Die Pulsauskopplung erfolgt über ein elektro-optisches Element 1' und einen Dünnschichtpolarisator 4', Die Modenkopplung wird durch einen sättigbar absorbierenden Spiegel 14' bewirkt. Die Kavität wird durch einen gekrümmten Spiegel 16 gefaltet.

Im Gegensatz zum Femtosekunden-Lasersystem der Fig.1 kann auf ein Dispersionsmanagement verzichtet werden, so dass keine Folge von dispersiven Spiegelelementen notwendig ist.

Bei einer Erzeugung von Pikosekundenpulsen ist es aus Stabilitätsgründen vorteilhaft, die nichtlineare Phase kleiner als 100. mrad, insbesondere kleiner als 10 mrad zu wählen, wobei die nichtlineare Phase pro Resonatorumlauf und pro 1% Modulationstiefe des sättigbaren Absorberspiegels berechnet wird. Die Auswirkung der Selbstphasenmodulation auf die Stabilität eines Pikosekundenlasers wird beispielsweise in R. Paschotta, U. Keller, "Passive mode locking with slow saturable absorbers", Appl. Phys. B 73, Seiten 653-662, 2001 beschrieben. Durch die Wahl eines entsprechend grossen Modendurchmessers am elektro-optischen Modulator und im Lasermedium lässt sich die nichtlineare Phase hinreichend klein halten.

Alternativ zu den Anordnungen der Fig.1 und Fig.2 kann auch ein scheibenförmiges Lasermedium in sogenannter Thin-Disk-Anordnung verwendet werden, wobei dieses neben einen einem runden Pumplichtfleck auch mit asymmetrischen Pumplichtflecken gepumpt werden kann. Dabei wird zur Vermeidung von zu hoher thermischer Belastung des laseraktiven Materials ein im wesentlichen länglicher Pumplichtfleck auf ein auf einer Temperatursenke angeordnetes Lasermedium eingestrahlt, so dass ein zweidimensionaler Wärmefluß entsteht. Hierdurch werden eine verbesserte Kühlung und eine Reduzierung der maximalen Temperatur bewirkt. Eine solche Anordnung ist beispielsweise in der PCT/EP/2004/005813 beschrieben. Zur Erzeugung eines länglichen Pumplichtflecks kann auch der Effekt mehrfacher Reflexionen verwendet werden. Hierbei kann durch eine gegenüber einer anderen Oberfläche verkippte Spiegelfläche eine mehrfache Reflexion mit veränderlichem Abstand der Reflexionspunkte erreicht werden, die nach einer gewissen Anzahl von Reflexionen zur Umkehr der Richtung führt. In diesem Beispiel erfolgen die Reflexionen zwischen der Spiegelfläche und einer Reflexionsschicht im oder auf dem Lasermedium, wobei diese Reflexionsschicht zwischen Lasermedium und Temperatursenke angebracht sein kann. Der Pumplichtstrahl, z.B. aus einer einzigen oder einer Mehrzahl von Laserdioden, wird bei diesem Setup von einer Seite ein- und wieder ausgekoppelt, so daß eine konstruktiv vorteilhafte Anordnung möglich wird. Alternativ kann aber auch die Spiegelfläche planparallel zur Reflexionsschicht angeordnet sein, so daß eine Richtungsumkehr des Teilstrahls durch einen weiteren Spiegel in an sich bekannter Weise erfolgt. In analoger Weise können auch der Lasermode und damit das zu verstärkende Strahlungsfeld mehrfach durch das Lasermedium geführt werden und somit mehrfache Verstärkung erfahren. Die Scheibenanordnung hat gerade mit Hinblick auf die Minimierung der Selbstphasenmodulation den Vorteil, dass die optische Länge des optischen Lasermediums sehr gering gehalten werden kann (<<1mm typisch).

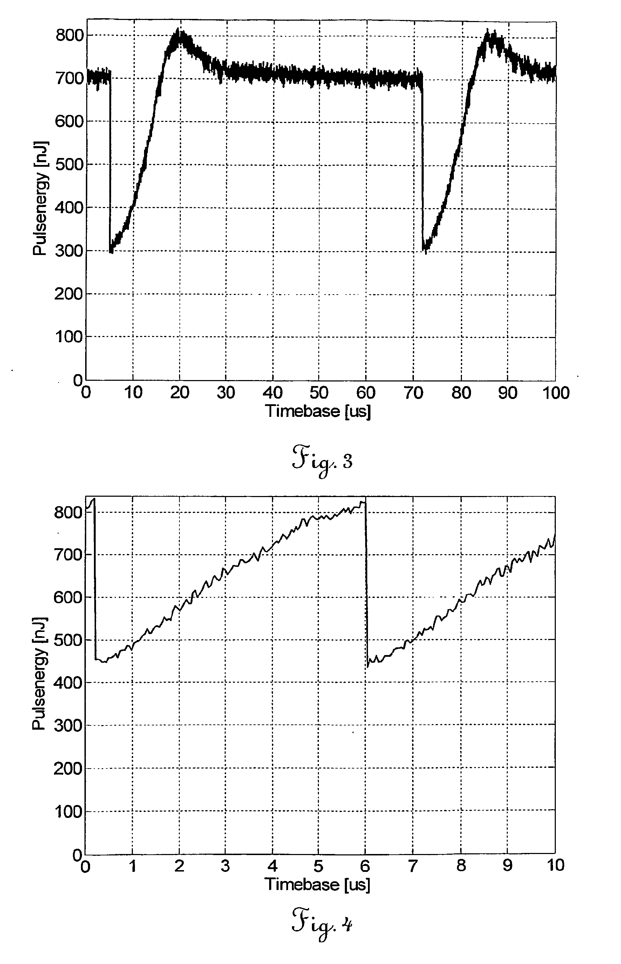

Fig.3 und Fig.4 zeigen den Verlauf der Pulsenergie innerhalb der Kavität in Zeitabhängigkeit. Durch das erfindungsgemäße Lasersystem können Repetitionsraten der Auskopplung bis über 1MHz erzielt werden, wobei der Kontrast zwischen ausgekoppelten Pulsen und den schwachen Hintergrund-Pulsen besser als 1:1000 ist. Als Pulsenergien werden mehr als 400 nJ erreicht, was Pulsspitzenleistungen von mehr als 1 MW entspricht. Die spektrale Breite des Ausgangs liegt bei 4 nm und die Dauer der ausgekoppelten Pulse beträgt ca. 300 fs, was durch Autokorrelation bestimmt wurde. Damit resultiert ein Zeit-Bandbreiten-Produkt von 0,33, was nahe an der Fourier-Grenze liegt.

Fig.3 und Fig.4 zeigen typische Verläufe der Relaxation zwischen den Pulsauskopplungen. Fig.3 zeigt den Verlauf bei einer Repetitionsrate von 15 kHz und Fig.3 bei 173 kHz. In Fig.4 wird dabei nach jeder Auskopplung wieder ein stationärer Zustand erreicht, wobei die Relaxationsschwingung stark gedämpft ist, was mit der Soliton-Pulsdynamik erklärt werden kann. In Fig.4 erfolgt die Auskopplung noch während des Aufbaus des Strahlungsfeldes und damit vor Erreichen eines stationären Zustands.

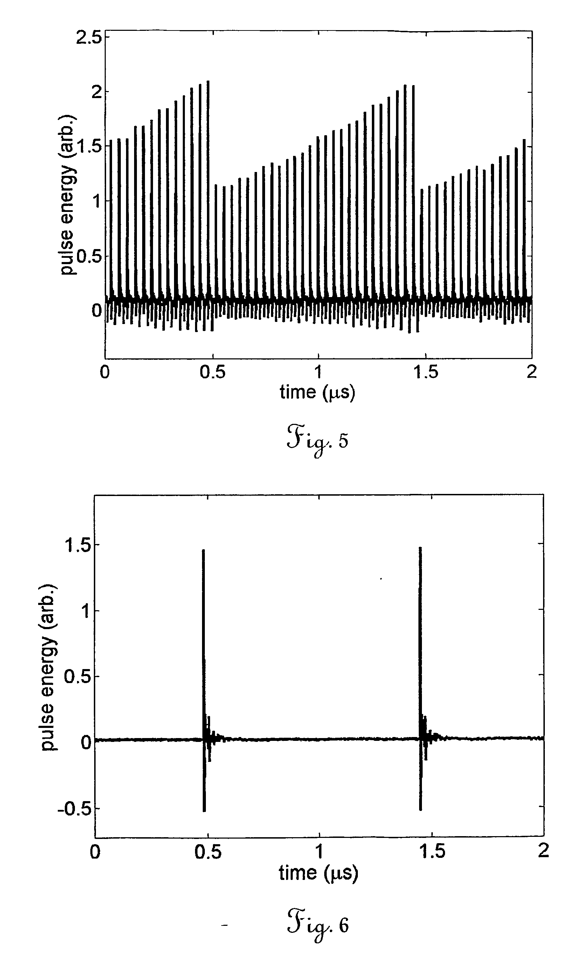

In Fig.5 erfolgt die Darstellung der Pulsevolution innerhalb der Kavität für eine Repetitionsfrequenz von 1 MHz in einer Pikosekunden-Anordnung mit einem Nd:Vanadat Laser mit EOM. Die Pulsevolution ist als Funktion der Zeit und bzgl. eines Bezugswertes normiert aufgetragen. Dargestellt sind die einzelnen Auskoppelvorgänge und der nachfolgende Pulswiederaufbau. Der Auskoppelgrad beträgt ca. 40% und die dabei ausserhalb der Kavität gemessene Pulsenergie beträgt ca. 1.7 μJ.

Die Pulsevolution nach Auskopplung und damit ausserhalb der Kavität wird für dieses Beispiel in Fig.6 dargestellt.

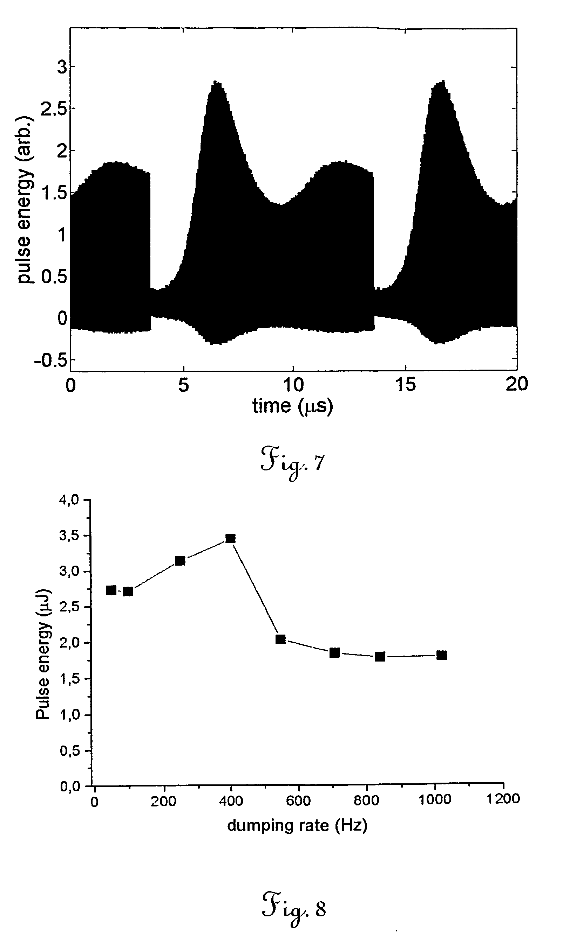

Fig.7 zeigt die Darstellung der Pulsevolution innerhalb der Kavität für eine Repetitionsfrequenz von 100 kHz in einer Pikosekunden-Anordnung. Die Relaxationsschwingungen des Lasers zwischen den einzelnen Auskoppelvorgängen sind deutlich zu erkennen.

In Fig.8 wird der Verlauf der ausgekoppelten Energie in Abhängigkeit von der Frequenz der Auskopplung für den Pikosekunden-Fall dargestellt. Die beobachtete Überhöhung bei ca. 400 kHz korrespondiert dabei mit dem ersten Maximum der Relaxationsschwingung, welche sich bei dieser Auskoppelfrequenz einstellt.

Es versteht sich, dass die dargestellten Lasersysteme bzw. Laseranordnung nur Ausführungsbeispiele von vielen erfindungsgemäss realisierbaren Ausführungsformen darstellen und der Fachmann alternative Realisierungsformen des Laseraufbaus, z.B. unter Verwendung anderer Resonatoranordnungen, Resonatorkomponenten oder Pumpverfahren, wie z. B. Scheibenlaser (Thin-Disk-Laser), ableiten kann. Insbesondere ist es möglich, die Schalt- und/oder Regelelemente über die angegebenen Beispiele hinaus anders zu gestalten, beispielsweise durch Verwendung alternativer dispersiver Komponenten, Lasermedien oder anderer elektro-optischer Elemente, welche auch höhere Repetitionsraten realisierbar machen.

**Patentansprüche**

1. Hochrepetierendes modengekoppeltes Ultrakurzpulslasersystem mit einer Repetitionsrate > 10kHz, insbesondere > 100kHz, zur Erzeugung von Femto- oder Pikosekundenpulsen, nach dem Prinzip der Pulsauskopplung mit mindestens

   - einem verstärkenden Lasermedium (11,11'),
   - einem Laserresonator mit mindestens einem Resonatorspiegel (6a-d,7a-g,8a-i,16,14,14') und mindestens einer Pulsauskopplungskomponente (1,1'),
   - einem sättigbaren Absorberspiegel (14,14') und
   - einer Pumpquelle (9,9'), insbesondere eine Laserdiodenquelle, zum Pumpen des Lasermediums (11,11'),

**dadurch gekennzeichnet, dass**
die Pulsauskopplungskomponente (1,1') ein elektrooptischer Modulator ist.

2. Ultrakurzpulslasersystem nach Anspruch 1,
   **dadurch gekennzeichnet, dass**
   der elektrooptische Modulator eine BBO-Zelle ist.

3. Ultrakurzpulslasersystem nach Anspruch 1,
   **dadurch gekennzeichnet, dass**
   der elektrooptische Modulator eine RTP -Zelle ist, insbesondere mit einer Komponente zum Ausgleich einer thermischen Drift.

4. Ultrakurzpulslasersystem nach einem der vorangehenden Ansprüche,
   **gekennzeichnet durch**
   wenigstens einen dispersiven Spiegel (6a-d,7a-g,8a-i) zur Dispersionskompensation, insbesondere ein Gires-Tournois-Interferometer.

5. Ultrakurzpulslasersystem nach Anspruch 4,
   **dadurch gekennzeichnet, dass**
   das Lasersystem so ausgebildet ist, dass bei der Erzeugung von Pikosekundenpulsen die nichtlineare Phase kleiner als 100 mrad, insbesondere kleiner als 10 mrad ist, wobei die nichtlineare Phase pro Resonatorumlauf und pro 1% Modulationstiefe des sättigbaren Absorberspiegels berechnet wird.

6. Ultrakurzpulslasersystem nach einem der vorangehenden Ansprüche,
   **dadurch gekennzeichnet, dass**
   das Lasersystem so ausgebildet ist, dass bei der Erzeugung von Femtosekundenpulsen der r-Parameter als Verhältnis von Resonatorperiode und Solitonenperiode kleiner als 1, insbesondere kleiner als 0,25 ist, wobei sich der r-Parameter insbesondere gemäß

$$r = \frac{E \cdot \kappa \cdot 1,763}{\pi \cdot \tau_{FWHM} \cdot 1,134}$$

mit

$\tau_{FWHM}$ als Halbwertsbreite von sech$^2$-Solitonen,
$E$ als Pulsenergie,
$\kappa$ als Selbstphasenmodulationsparameter

berechnet.

7. Ultrakurzpulslasersystem nach einem der vorangehenden Ansprüche,
   **dadurch gekennzeichnet, dass**
   das Lasermedium (11,11') Ytterbium-gedoptes Glas oder Nd:YVO$_4$ ist.

8. Ultrakurzpulslasersystem nach einem der vorangehenden Ansprüche,
   **dadurch gekennzeichnet, dass**
   das Lasermedium (11,11') Ytterbium dotierte Wolframate, insbesondere Yb:KGW oder Yb:KYW, aufweist.

9. Ultrakurzpulslasersystem nach einem der vorangehenden Ansprüche,
   **dadurch gekennzeichnet, dass**
   das Lasermedium eine scheibenförmige Geometrie aufweist.

10. Ultrakurzpulslasersystem nach einem der vorangehenden Ansprüche,
    **dadurch gekennzeichnet, dass**
    die Pumpquelle so ausgebildet und angeordnet ist, dass ein Pumplichtfleck mit einem Verhältnis von Länge zu Breite von wenigstens 2:1 ausgebildet wird, wobei der Pumplichtfleck aus einem einzigen Teilstrahl oder der Kombination von mehreren Teilstrahlen besteht, vorzugsweise wobei die Teilstrahlen von Laserdioden erzeugt werden.

**11.** Verwendung eines hochrepetierenden modengekoppelten Ultrakurzpulslasersystems nach einem der vorangehenden Ansprüche zur unmittelbaren Materialbearbeitung durch Plasmaerzeugung.

**Claims**

**1.** High-repetition mode-locked ultra-short pulse laser system having a repetition rate of >10kHz, in particular >100kHz, for generating femtosecond or picosecond pulses, according to the principle of cavity dumping, comprising at least

• one amplifying laser medium (11, 11')
• a laser resonator having at least one resonator mirror (6a-d, 7a-g, 8a-i, 16, 14, 14') and at least one cavity dumping component (1, 1'),
• one saturable absorber mirror (14, 14') and
• one pump source (9, 9'), in particular one laser diode source, for pumping the laser medium (11, 11'),

**characterized in that** the cavity dumping component (1, 1') is an electrooptical modulator.

**2.** Ultra-short pulse laser system according to Claim 1, **characterized in that** the electrooptical modulator is a BBO cell.

**3.** Ultra-short pulse laser system according Claim 1, **characterized in that** the electrooptical modulator is an RTP cell, in particular having a component for compensating a thermal drift.

**4.** Ultra-short pulse laser system according to any of the preceding Claims, **characterized by** at least one dispersive mirror (6a-d, 7a-g, 8a-i) for dispersion compensation, in particular a Gires-Tournois interferometer.

**5.** Ultra-short pulse laser system according to Claim 4, **characterized in that** the laser system is formed so that, during the generation of picosecond pulses, the nonlinear phase is less then 100 mrad, in particular less than 10 mrad, the nonlinear phase being calculated per resonator cycle and per 1 % modulation depth of the saturable absorber mirror.

**6.** Ultra-short pulse laser system according to any of the preceding Claims, **characterized in that** the laser system is formed so that, during the generation of femtosecond pulses, the r parameter as a ratio of resonator period and soliton period is less than 1, in particular less than 0.25, the r parameter being calculated in particular according to

$$r = \frac{E \cdot \kappa \cdot 1.763}{\pi \cdot \tau_{FWHM} \cdot 1.134}$$

where

$\tau_{FWHM}$ is the half-width of sech$^2$ solitons,
E is the pulse energy,
$\kappa$ is the self-phase modulation parameter.

**7.** Ultra-short pulse laser system according to any of the preceding Claims, **characterized in that** the laser medium (11, 11') is ytterbium-doped glass or Nd:YVO$_4$.

**8.** Ultra-short pulse laser system according to any of the preceding Claims, **characterized in that** the laser medium (11, 11') comprises ytterbium-doped tungstates, in particular Yb:KGW or Yb:KYW.

**9.** Ultra-short pulse laser system according to any of the preceding Claims, **characterized in that** the laser medium has a disc-shaped geometry.

**10.** Ultra-short pulse laser system according to any of the preceding Claims, **characterized in that** the pump source is formed and arranged so that a pump light spot having a ratio of length to width of at least 2:1 is formed, the pump light spot consisting of a single partial beam or the combination of a plurality of partial beams, the partial beams preferably being produced by laser diodes.

**11.** Use of a high-repetition mode-locked ultra-short pulse laser system according to any of the preceding Claims for direct material processing by plasma generation.

**Revendications**

**1.** Système laser à impulsions ultracourtes à couplage de mode et à taux de répétition élevé, avec un taux de répétition > 10 kHz, en particulier > 100 kHz, pour produire des impulsions dans le domaine des femto- ou des picosecondes, selon le principe de la décharge de la cavité, comprenant au moins :

   • un milieu laser (11, 11') amplificateur,
   • un résonateur laser ayant au moins un miroir de résonateur (6a-d, 7a-g, 8a-i, 16, 14, 14') et au moins un composant de décharge de la cavité (1, 1'),
   • un miroir absorbeur (14, 14') saturable, et
   • une source de pompage (9, 9'), en particulier une source à diode laser, pour pomper le milieu laser (11, 11'),

   **caractérisé en ce que**
   le composant de décharge de la cavité (1, 1') est un modulateur électro-optique.

**2.** Système laser à impulsions ultracourtes selon la revendication 1, **caractérisé en ce que** le modulateur électro-optique est une cellule au bêta borate de barium (BBO).

**3.** Système laser à impulsions ultracourtes selon la revendication 1, **caractérisé en ce que** le modulateur électro-optique est une cellule au phosphate de rubidium titanyl (RTP), en particulier ayant un composant pour la compensation d'une dérive thermique.

**4.** Système laser à impulsions ultracourtes selon l'une des revendications précédentes, **caractérisé par** au moins un miroir dispersif (6a-d, 7a-g, 8a-i) pour la compensation de la dispersion, en particulier un interféromètre Gires-Tournois.

**5.** Système laser à impulsions ultracourtes selon la revendication 4, **caractérisé en ce que** le système laser est réalisé de manière que, lors de la génération d'impulsions de l'ordre des picosecondes, la phase non linéaire soit inférieure à 100 mrad, en particulier, inférieure à 10 mrad, la phase non linéaire étant calculée par tour de rotation du résonateur et par 1 % de profondeur de modulation du miroir absorbeur saturable.

**6.** Système laser à impulsions ultracourtes selon l'une des revendications précédentes, **caractérisé en ce que** le système laser est réalisé de manière que, lors de la production d'impulsions de l'ordre des femtosecondes, le paramètre r, en tant que rapport entre la période du résonateur et la période du soliton, soit inférieur à 1, en particulier inférieur à 0,25, sachant que le paramètre r en particulier est calculé avec

$$r = \frac{E \cdot \kappa \cdot 1,763}{\pi \cdot \tau_{FWHM} \cdot 1,134} \, ,$$

avec

   $\tau_{FWHM}$ largeur de demi-valeur des solitons six$^2$,
   E énergie d'impulsion,
   $\kappa$ paramètre d'automodulation de phase.

**7.** Système laser à impulsions ultracourtes selon l'une des revendications précédentes, **caractérisé en ce que** le milieu laser (11, 11') est du verre dopé à l'ytterbium, ou du Nd:YVO$_4$.

8. Système laser à impulsions ultracourtes selon l'une des revendications précédentes, **caractérisé en ce que** le milieu laser (11, 11') présente des tungstates dopés à l'ytterbium, en particulier Yb:KGW ou Yb:KYW.

9. Système laser à impulsions ultracourtes selon l'une des revendications précédentes, **caractérisé en ce que** le milieu laser présente une géométrie discoïde.

10. Système laser à impulsions ultracourtes selon l'une des revendications précédentes, **caractérisé en ce que** la source de pompage est réalisée et disposée de manière que soit réalisée une tache de lumière pompée ayant un rapport entre longueur et largeur d'au moins 2:1, la tache de lumière pompée étant composée d'un rayon partiel unique, ou de la composition de plusieurs rayons partiels, de préférence les rayons partiels étant produits par des diodes lasers.

11. Utilisation d'un système laser à impulsions ultracourtes à couplage de mode, à taux de répétition élevé, selon l'une des revendications précédentes, pour l'usinage direct de matériaux par génération de plasma.

Fig. 1

Fig. 2

Fig. 3

Fig. 4

Fig. 5

Fig. 6

Fig. 7

Fig. 8

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5848080 A
- US 5870421 A
- EP 2004005813 W

**In der Beschreibung aufgeführte Nicht-Patentliteratur**

- **M. RAMASWAMY ; M. ULMAN ; J. PAYE ; J.G. FU-JIMOTO.** Cavity-dumped femtosecond Kerr-lens mode-locked Ti:Al2O3 laser. *Optics Letters,* 01. November 1993, vol. 18 (21), 1822-1824
- **Z. WIE ; M.S. PSHENICHNIKO ; D.A. WIERSMA ; ROBERT SZIPÖCS.** All-solid-state cavity-dumped sub-5-fs-laser. *Appl. Phys.,* 1997, vol. 65, 175-188
- **E. KRÜGER.** High-repetition-rate electro-optic cavity dumping. *Rev. Sci. Instrum.,* Februar 1995, vol. 66 (2), 961-967
- **V. KUBECEK ; J. BIEGERT ; J.-C. DIELS ; M.R. KOKTA.** Practical source of 50 ps pulses using a flashlamp pumped Nd:YAG laser and passive all-solid-state pulse control. *Optics Communications,* 2000, vol. 177, 317-321
- **F. KRAUSZ ; M.E. FERMANN ; T. BRABEC ; P.F. CURLY ; M. HOFER ; M.H. OBER ; C. SPIELMANN ; E. WINTNER ; A.J. SCHMIDT.** Femtosecond Solid-State Lasers. *IEEE Journal of Quantum Electronics,* Oktober 1992, vol. 28 (10), 2097-2120
- **R. PASCHOTTA ; U. KELLER.** Passive mode locking with slow saturable absorbers. *Appl. Phys.,* 2001, vol. 73, 653-662